(19) Europäisches Patentamt
European Patent Office
Office européen des brevets

(11) EP 4 790 752 A1

(12) **EUROPEAN PATENT APPLICATION**

(43) Date of publication:
**12.08.2026 Bulletin 2026/33**

(21) Application number: **26150024.3**

(22) Date of filing: **02.01.2026**

(51) International Patent Classification (IPC):
***H01M 4/04*** (2006.01) ***H01M 4/13*** (2010.01)
***H01M 10/0525*** (2010.01) ***H01M 10/0562*** (2010.01)
***H01M 10/0585*** (2010.01) ***H01M 4/131*** (2010.01)

(52) Cooperative Patent Classification (CPC):
**H01M 4/0404; H01M 4/13; H01M 4/131; H01M 10/0525; H01M 10/0562; H01M 10/0585;**
H01M 2004/028; H01M 2300/0068

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **14.01.2025 KR 20250005348**

(71) Applicant: **SAMSUNG SDI CO., LTD.**
**Yongin-si, Gyeonggi-do 17084 (KR)**

(72) Inventors:
- **LEE, Wongi**
**17084 Yongin-si, Gyeonggi-do (KR)**
- **CHOI, Jinkyu**
**17084 Yongin-si, Gyeonggi-do (KR)**
- **KIM, Jinhee**
**17084 Yongin-si, Gyeonggi-do (KR)**
- **YOU, Hoseon**
**17084 Yongin-si, Gyeonggi-do (KR)**
- **KANG, Dongwoo**
**17084 Yongin-si, Gyeonggi-do (KR)**

(74) Representative: **Michalski Hüttermann & Partner mbB**
**Kaistraße 16A**
**40221 Düsseldorf (DE)**

Remarks:
The references to the drawing(s) no. 16 are deemed to be deleted (Rule 56(4)(6) EPC).

# (54) POSITIVE ELECTRODE FOR ALL-SOLID-STATE BATTERY, AND METHOD FOR MANUFACTURING THE SAME

(57) The present disclosure relates to a positive electrode for an all-solid-state battery. The present disclosure describes a positive electrode current collector, and a positive electrode active material layer on the positive electrode current collector. The positive electrode current collector includes a main body section and a positive electrode tab protruding from the main body section in one direction. The positive electrode active material layer is provided on the main body section, and the positive electrode active material layer includes a positive electrode active material and a solid electrolyte. The main body section includes a first end and a second end opposite to each other in the one direction. The first end crosses a boundary between the positive electrode tab and the body section, and the main body section include a tab adjacent section extending from the first end toward the second end.

FIG. 3

CSH
ED2
L1
ED1
M
AR2
AR1
CML
COL1
A
A'
L2
ADJ
MBD
CTB
D3
D2

EP 4 790 752 A1

## Description

CROSS-REFERENCE TO RELATED APPLICATION

The present application claims priority to Korean Patent Application No. 10-2025-0005348, filed on January 14, 2025.

BACKGROUND

The present disclosure relates to an all-solid-state battery.

With increasing industrial demand, the development of high-energy-density and highly safe batteries has been actively pursued. Lithium-ion batteries, for instance, have been widely commercialized not only for consumer electronics and communication devices but also in the automotive industry. In automotive applications, battery safety is relevant due to the direct impact thereof on user safety.

All-solid-state batteries, which use a solid electrolyte instead of a liquid electrolyte, appears to be a promising alternative. Unlike conventional lithium-ion batteries that contain flammable organic solvents, all-solid-state batteries significantly reduce the risk of fire or explosion, even in the event of a short circuit. As a result, all-solid-state batteries offer a substantial improvement in safety compared to lithium-ion batteries utilizing liquid electrolytes.

SUMMARY

The present disclosure may reduce or prevent a local irreversible deposition caused by a biased current flow in the positive electrode. In addition, the present disclosure may improve the lifespan of the battery by maintaining the electrical and chemical properties of the positive electrode.

An example embodiment of the present disclosure may include a positive electrode for an all-solid-state battery, including a positive electrode current collector, and a positive electrode active material layer on the positive electrode current collector.

The positive electrode current collector may include a main body section and a positive electrode tab protruding in one direction from the main body section. The positive electrode active material layer may be provided on the main body section, and the positive electrode active material layer may include a positive electrode active material and a solid electrolyte.

The main body section may include a first end and a second end opposite to each other in the one direction. The first end may cross a boundary between the positive electrode tab and the main body section. The main body section may include a tab adjacent section extending from the first end toward the second end.

The positive electrode active material layer may include a first region on the tab adjacent section and a second region which is a remainder excluding the first region.

A content of the solid electrolyte in the first region may be less than about 10 wt%, and a content of the solid electrolyte in the second region may be greater than about 10 wt%.

An example embodiment of the present disclosure may include an all-solid-state battery including the positive electrode, a negative electrode including a negative electrode current collector and a negative electrode coating layer on the negative electrode current collector, and a solid electrolyte layer between the positive electrode and the negative electrode.

An example embodiment of the present disclosure may include a method for manufacturing a positive electrode for an all-solid-state battery, including forming, on a metal substrate, a first active material region and a second active material region side by side in a width direction of the metal substrate, forming a positive electrode sheet by drying the first and second active material regions, and forming a positive electrode composite layer by cutting the positive electrode sheet.

Each of the first and second active material regions may include a positive electrode active material and a solid electrolyte. The positive electrode sheet may include a first non-coated region formed on one side thereof, and the first active material region may be adjacent to the first non-coated region in the width direction.

The positive electrode composite layer may include an electrode tab formed by cutting the first non-coated region, and a first positive electrode active material layer including the first and the second active material regions.

A content of the solid electrolyte in the first active material region may be less than about 10 wt%, and a content of the solid electrolyte in the second active material region may be greater than 10 wt%.

Preferably, the positive electrode active material layer may end at the first end of the main body section and may end in the opposite direction at the second end of the main body section.

BRIEF DESCRIPTION OF DRAWINGS

FIGS. 1 and 2 are plan views of a positive electrode for an all-solid-state battery according to an example embodiment of the present disclosure.
FIG. 3 is a cross-sectional view taken along line A-A' in FIG. 1.
FIG. 4 is an enlarged view of the region "M" in FIG. 3.
FIG. 5 is a cross-sectional view of a positive electrode for an all-solid-state battery according to an example embodiment of the present disclosure.
FIG. 6 is a cross-sectional view of a positive electrode for an all-solid-state battery according to an example embodiment of the present disclosure.
FIG. 7 is a cross-sectional view of a positive electrode for an all-solid-state battery according to an example embodiment of the present disclosure.
FIGS. 8 and 9 are cross-sectional views of an all-solid-state battery unit cell according to an example embodiment of the present disclosure.
FIGS. 10 to 13 illustrate a method for manufacturing a positive electrode according to an example embodiment of the present disclosure.
FIG. 14A shows an appearance of an all-solid-state battery according to an example embodiment.
FIG. 14B is a cross-sectional SEM image of an all-solid-state battery according to one embodiment.
FIG. 15A shows the appearance of an all-solid-state battery according to a comparative example.
FIG. 15B is a cross-sectional SEM image of an all-solid-state battery according to a comparative example.
FIG. 16 is a flowchart illustrating a method of manufacturing a positive electrode for an all-solid-state battery, according to an example embodiment.

DETAILED DESCRIPTION OF EMBODIMENTS

To fully understand the configuration and effects of the present disclosure, some example embodiments are described with reference to the accompanying drawings. However, the present disclosure is not limited to the following example embodiments, and may be implemented in various forms. The example embodiments are provided solely to illustrate the present disclosure and to enable those skilled in the art to fully understand its scope.

In this description, when an element is described as being "on" another element, the element may be "directly on" the other element, or one or more intervening elements may be present therebetween. In the drawings, certain thicknesses may be exaggerated to better illustrate technical details. Throughout the specification, like reference numerals indicate like elements.

The example embodiments described herein may be illustrated using sectional and/or plan views, which are presented as idealized examples of the present disclosure. The thicknesses of layers and regions in the drawings may be exaggerated for clarity. The regions shown in the drawings are for illustrative purposes and should not be construed as limiting the scope of the present disclosure. Although terms such as "first," "second," and "third" may be used to describe various elements, these terms are merely for distinction and do not imply any particular order or hierarchy. The example embodiments described and illustrated herein include complementary variations.

The terms used in this description serve only to explain various example embodiments and are not intended to limit the present disclosure. Unless explicitly stated otherwise, singular forms may also include plural forms. The terms "comprises/includes" and "comprising/including" do not exclude the presence or addition of one or more other components.

In this description, the phrase "combination thereof" may refer to a mixture, a stack, a composite, a copolymer, an alloy, a blend, or a reaction product.

Unless otherwise specifically defined, the term "particle diameter" refers to an average particle diameter. The particle diameter may represent the median particle size (D50), which corresponds to the diameter of particles at 50 vol% in a cumulative particle size distribution. The average particle diameter (D50) can be measured using widely known methods, such as, e.g., a particle size analyzer, transmission electron microscope (TEM) imaging, or scanning electron microscope (SEM) imaging. Alternatively, dynamic light scattering may be used, where particle counts within size ranges are analyzed to calculate the average particle diameter (D50). Additionally, a laser scattering method may be employed, in which a target particle is dispersed in a solvent, introduced into a laser scattering particle measurement device (e.g., MT3000 from Microtrac, Inc.), irradiated with ultrasonic waves at 28 kHz and 60 W, and subsequently analyzed to determine the D50 value based on a 50% cumulative particle size distribution.

The phrases "A or B," "at least one of A and B," "at least one of A or B," "A, B, or C," "at least one of A, B, and C," and "at least one of A, B, or C" include any one or all possible combinations of the listed elements.

When the terms "about" or "substantially" are used in this specification in connection with a numerical value, it is intended that the associated numerical value include a tolerance of $\pm$10% around the stated numerical value. When ranges are specified, the range includes all values therebetween such as increments of 0.1%.

## All Solid-State Battery

An all-solid-state battery according to example embodiments of the present disclosure may include a unit cell. A unit cell may refer to a minimum unit required to operate the battery system. A unit cell may include the essential components of the all-solid-state battery. For example, the unit cell may include a positive electrode, a negative electrode, and a solid electrolyte layer between the positive electrode and the negative electrode. In some cases, the unit cell may further include an additional functional layer, such as an adhesion enhancement layer, which is disposed between the positive electrode and the solid electrolyte layer, or between the negative electrode and the solid electrolyte layer. The all-solid-state battery may include a plurality of unit cells.

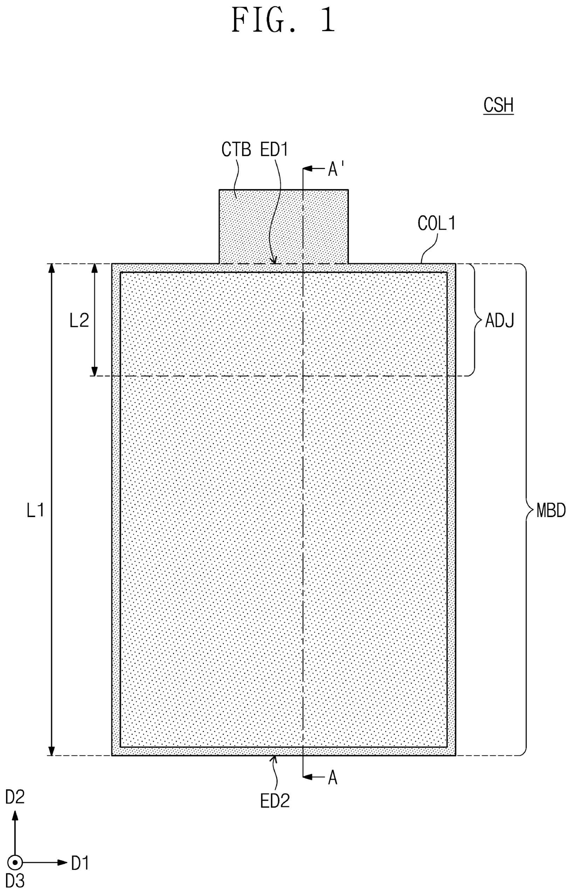

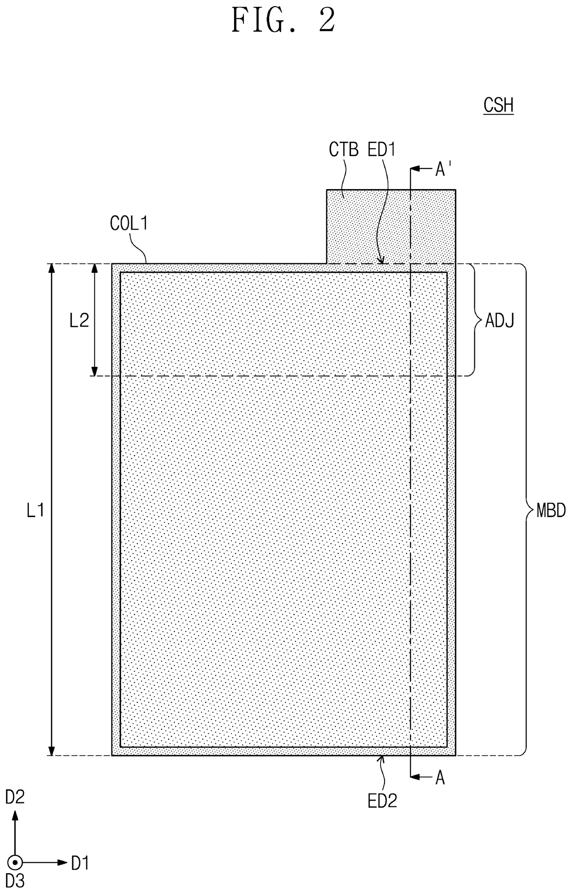

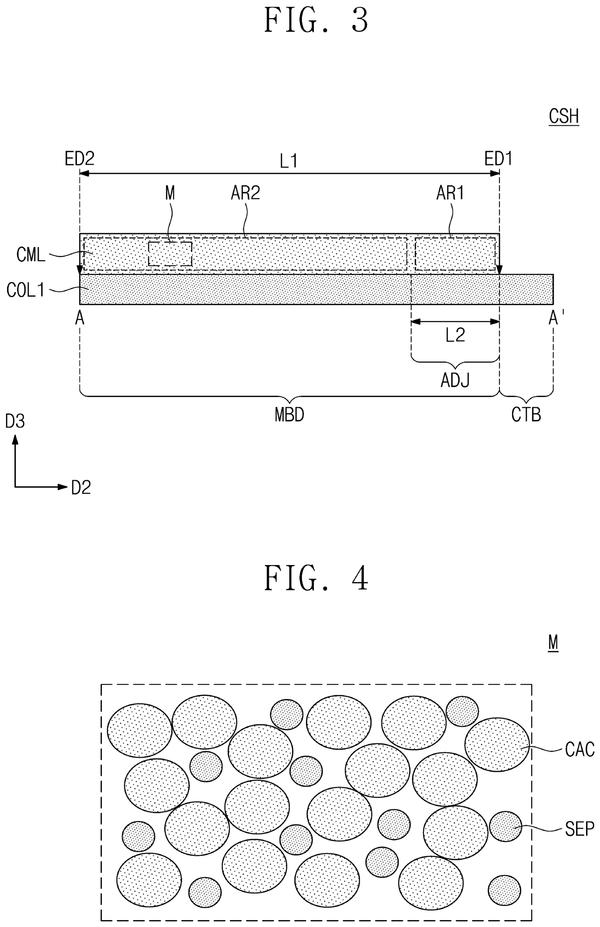

FIGS. 1 and 2 are plan views of a positive electrode CSH according to example embodiments of the present disclosure. FIG. 3 is a cross-sectional view of the positive electrode CSH taken along line A-A' in FIG. 1. FIG. 4 is an enlarged view of the region "M" in FIG. 3. The positive electrode CSH according to an example embodiment of the present disclosure may include a positive electrode current collector COL1 and a positive electrode active material layer CML disposed on the positive electrode current collector COL1. The positive electrode active material layer CML may include a positive electrode active material CAC, and a solid electrolyte SEP. Although not illustrated, the positive electrode active material layer CML may further include a binder or/and a conductive material.

The positive electrode current collector COL1 may provide a reference surface on which the positive electrode active material layer CML is disposed. The positive electrode current collector COL1 may include a plate or foil including, for example, at least one of indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof.

In order to increase the binding force between the positive electrode current collector COL1 and the positive electrode active material layer CML, a carbon-containing layer having a thickness in a range of about 0.1 $\mu$m to about 4 $\mu$m, or about 1 $\mu$m to about 3 $\mu$m, may be further disposed between the positive electrode current collector COL1 and the positive electrode active material layer CML. For example, the carbon-containing layer may include a relatively large amount of binder. The carbon-containing layer may improve the adhesion between the positive electrode current collector COL1 and the positive electrode active material layer CML. The carbon-containing layer may improve the conductivity of the positive electrode CSH.

The positive electrode active material CAC of the positive electrode active material layer CML may include a material capable of reversibly absorbing and desorbing lithium ions. The positive electrode active material CAC may include a plurality of particles. The positive electrode active material CAC may include, for example, but is not necessarily limited to, at least one of lithium transition metal oxides (e.g., lithium cobalt oxide (LCO), lithium nickel oxide, lithium nickel cobalt oxide, lithium nickel cobalt aluminum oxide (NCA), lithium nickel cobalt manganese oxide (NCM), lithium manganate, or lithium iron phosphate), nickel sulfide, copper sulfide, lithium sulfide, iron oxide, or vanadium oxide. Each of, or at least one of, the positive electrode active material (CAC) may be or include a single material or a mixture of two or more materials.

The lithium transition metal oxide may be or include, for example, a compound represented by one of $Li_aA_{1-b}B_bD_2$ (where $0.90 \leq a \leq 1$ and $0 \leq b \leq 0.5$), $Li_aE_{1-b}B_bO_{2-c}D_c$ (where $0.90 \leq a \leq 1$, $0 \leq b \leq 0.5$, and $0 \leq c \leq 0.05$), $LiE_{2-b}B_bO_{4-c}D_c$ (where $0 \leq b \leq 0.5$ and $0 \leq c \leq 0.05$), $Li_aNi_{1-8-c}Co_bB_cD_\alpha$ (where $0.90 \leq a \leq 1$, $0 \leq b \leq 0.5$, $0 \leq c \leq 0.05$, and $0<\alpha<2$), $Li_aNi_{1-8-c}Co_8B_cO_{2-\alpha}F_\alpha$ (where $0.90 \leq a \leq 1$, $0 \leq b \leq 0.5$, $0 \leq c \leq 0.05$, and $0<\alpha<2$), $Li_aNi_{1-b-c}Mn_bB_cD_\alpha$ (where $0.90 \leq a \leq 1$, $0 \leq b \leq 0.5$, $0 \leq c \leq 0.05$, and $0< \alpha \leq 2$), $Li_aNi_{1-b-c}Mn_bB_cO_{2-\alpha}F_\alpha$ (where $0.90 \leq a \leq 1$, $0 \leq b \leq 0.5$, $0 \leq c \leq 0.05$, and $0<\alpha<2$), $Li_aNi_bE_cG_dO_2$ (where $0.90 \leq a \leq 1$, $0 \leq b \leq 0.9$, $0 \leq c \leq 0.5$, and $0.001 \leq d \leq 0.1$), $Li_aNi_bCo_cMn_dG_eO_2$ (where $0.90 \leq a \leq 1$, $0 \leq b \leq 0.9$, $0 \leq c \leq 0.5$, $0 \leq d \leq 0.5$, and $0.001 \leq e \leq 0.1$), $Li_aNiG_bO_2$ (where $0.9 \leq a \leq 1$ and $0.001 \leq b \leq 0.1$), $Li_aCoG_bO_2$ (where $0.90 \leq a \leq 1$ and $0.001 \leq b \leq 0.1$), $Li_aMnG_bO_2$ (where $0.90 \leq a \leq 1$ and $0.001 \leq b \leq 0.1$), $Li_aMn_2G_bO_4$ (where $0.90 \leq a \leq 1$ and $0.001 \leq b \leq 0.1$), $QO_2$, $QS_2$, $LiQS_2$, $V_2O_5$, $LiV_2O_5$, $LiIO_2$, $LiNiVO_4$, $Li_{3-f}J_2(PO_4)_3$ (where $0 \leq f \leq 2$), $Li_{3-f}Fe_2(PO_4)_3$ (where $0 \leq f \leq 2$), and $LiFePO_4$. In the compounds above, "A" may be or include at least one of Ni, Co, Mn, or a combination thereof, "B" may be or include at least one of Al, Ni, Co, Mn, Cr, Fe, Mg, Sr, V, a rare-earth element, or a combination thereof, "D" may be or include at least one of O, F, S, P, or a combination thereof, "E" may be or include at least one of Co, Mn, or a combination thereof, "F" may be or include at least one of F, S, P, or a combination thereof, "G" may be or include at least one of Al, Cr, Mn, Fe, Mg, La, Ce, Sr, V, or a combination thereof, "Q" may be or include at least one of Ti, Mo, Mn, or a combination thereof, "I" may be or include at least one of Cr, V, Fe, Sc, Y, or a combination thereof, and "J" may be or include at least one of V, Cr, Mn, Co, Ni, Cu, or a combination thereof.

The positive electrode active material CAC may include, for example, a lithium salt of a transition metal oxide having a layered rock salt type structure among lithium transition metal oxides discussed above. The term "layered rock salt type structure" may refer to a structure in which an oxygen atom layer and a metal atom layer are alternately and

regularly arranged in a <111> direction of a cubic rock salt type structure, where each atom layer forms a two-dimensional plane. The term "cubic rock salt type structure" may refer to a sodium chloride (NaCl) type structure, which is a type of crystal structure, and for example, has a structure in which face centered cubic lattices (FCCs) each formed of cations and anions are arranged displaced from each other by 1/2 (half) of a ridge of a unit lattice. The lithium transition metal oxide having the layered rock salt type structure may be or include a ternary lithium transition metal oxide, such as $LiNi_xCo_yAl_zO_2$ (NCA) or $LiNi_xCo_yMn_zO_2$ (NCM) (where 0<x<1,0<y<1, 0<z<1, and x+y+z=1). When the positive electrode active material CAC includes a ternary lithium transition metal oxide having the layered rock salt type structure, the unit cell may have increased energy density and improved thermal stability.

The compound included in the positive electrode active material CAC may be covered with a coating layer (not shown). The positive electrode active material CAC may be used in a mixture of the compound and a compound to which the coating layer is added. The coating layer added to a surface of the positive electrode active material may include, for example, at least one of oxide, hydroxide, oxyhydroxide, oxycarbonate, or hydrocarbonate of a coating element discussed below. The compound that constitutes the coating layer may be amorphous or crystalline. The coating element included in the coating layer may include at least one of Mg, Al, Co, K, Na, Ca, Si, Ti, V, Sn, Ge, Ga, B, As, Zr, or a mixture thereof. The coating layer may include, for example, $Li_2O$-$ZrO_2$ (LZO). A method for forming the coating layer may be determined within any methods that do not adversely affect physical characteristics of the positive electrode active material. The method of forming the coating layer may include, for example, spray coating or immersion.

In an example embodiment, the coating layer may be locally present on the surface of the positive electrode active material CAC, or exist in an aggregated state. In another example embodiment, the coating layer may be formed with a uniform thickness over the entire surface of the positive electrode active material CAC. For example, the standard deviation of the thickness of the coating layer may be about 10% or less, or about 5% or less, relative to the diameter of the positive electrode active material CAC.

The coating layer may constitute a buffer layer or a protective layer. The coating layer may facilitate the movement of lithium ions on the surface of the positive electrode active material CAC, and may improve the interfacial resistance by reducing the reactivity with solid electrolyte. The coating layer may improve the ion conductivity of the positive electrode active material CAC. The coating layer may improve the electrochemical characteristics of the battery by effectively protecting the positive electrode active materials CAC. The coating layer may mitigate volume change of the positive electrode active material CAC due to charge/discharge and improve structural stability.

When the positive electrode active material CAC includes nickel (Ni) as a ternary lithium transition metal oxide such as NCA or NCM, for example, it is possible to increase the capacity density of the unit cell and reduce metal elution of the positive electrode active material in a charged state. As a result, cycle characteristics in a charged state of the unit cell may be improved. The "cycle characteristic" may refer to properties that indicate the degree to which the unit cell is degraded due to charge and discharge. For example, the unit cell with high cycle characteristics may degrade less due to charge and discharge, while the unit cell with low cycle characteristics may degrade more due to charge and discharge.

The positive electrode active material CAC may have, for example, a spherical or oval particle shape. The particle diameter and content of the positive electrode active material CAC are not limited. For example, the average particle diameter of the positive electrode active material CAC analyzed by a scanning electron microscope (SEM) image may be in a range of about 200 nm to about 25 $\mu$m.

The solid electrolyte SEP of the positive electrode active material layer CML may have a particle shape. The solid electrolyte SEP may be dispersed between the positive electrode active materials CAC. The solid electrolyte SEP may include a sulfide-based solid electrolyte having desired or improved lithium-ion conductivity characteristics. The sulfide-based solid electrolyte may include, for example, at least one of $Li_2S$-$P_2S_5$, $Li_2S$-$P_2S_5$-LiX (where X is or includes a halogen element), $Li_2S$-$P_2S_5$-$Li_2O$, $Li_2S$-$P_2S_5$-$Li_2O$-LiI, $Li_2S$-$SiS_2$, $Li_2S$-$SiS_2$-LiI, $Li_2S$-$SiS_2$-LiBr, $Li_2S$-$SiS_2$-LiCl, $Li_2S$-$SiS_2$-$B_2S_3$-LiI, $Li_2S$-$SiS_2$-$P_2S_5$-LiI, $Li_2S$-$B_2S_3$, $Li_2S$-$P_2S_5$-$Z_mS_n$ (where m and n are each a positive integer, and "Z" is or includes at least one of Ge, Zn, and Ga), $Li_2S$-$GeS_2$, $Li_2S$-$SiS_2$-$Li_3PO_4$, $Li_2S$-$SiS_2$-$Li_pMO_q$ (where p and q are each a positive integer, and "M" is or includes at least one of P, Si, Ge, B, Al, Ga, and In), $Li_{7-x}PS_{6-x}Cl_x$ (where $0 \leq x \leq 2$), $Li_{7-x}PS_{6-x}Br_x$ (where $0 \leq x \leq 2$), and $Li_{7-x}PS_{6-x}I_x$ (where $0 \leq x \leq 2$).

The sulfide-based solid electrolyte may be or include, for example, an Argyrodite-type compound including at least one of $Li_{7-x}PS_{6-x}Cl_x$ ($0 \leq x \leq 2$), $Li_{7-x}SP_{6-x}Br_x$ ($0 \leq x \leq 2$), or $Li_{7-x}PS_{6-x}I_x$ ($0 \leq x \leq 2$). In particular, the sulfide-based solid electrolyte may include an argyrodite-type compound including at least one of $Li_6PS_5Cl$, $Li_6PS_5Br$ or $Li_6PS_5I$

Alternatively, the sulfide-based solid electrolyte may include an argyrodite-type compound including $Li_{7-a-c}M_aPS_{6-c}X_c$ ($0 \leq a \leq 2$, $0 \leq c \leq 2$). In the chemical formula above, X may be or include at least one of F, Br, Cl, I, or a combination thereof. M may include at least one of scandium (Sc), yttrium (Y), titanium (Ti), zirconium (Zr), hafnium (Hf), vanadium (V), niobium (Nb), tantalum (Ta), chromium (Cr), molybdenum (Mo), tungsten (W), manganese (Mn), technetium (Tc), rhenium (Re), iron (Fe), ruthenium (Ru), osmium (Os), cobalt (Co), rhodium (Rh), iridium (Ir), nickel (Ni), palladium (Pd), platinum (Pt), copper (Cu), silver (Ag), gold (Au), zinc (Zn), cadmium (Cd), mercury (Hg), aluminum (Al), gallium (Ga), indium (In), thallium (Tl), silicon (Si), germanium (Ge), tin (Sn), lead (Pb), arsenic (As), antimony (Sb), bismuth (Bi), or a combination thereof.

The density of the argyrodite-type solid electrolyte SEP may be in a range of about 1.5 g/cc to about 2.0 g/cc. Since the argyrodite-type solid electrolyte SEP has a density of about 1.5 g/cc or more, the internal resistance of the all-solid-state battery may be reduced, and it may be possible to hinder or prevent the solid electrolyte membrane from penetrating and short-circuiting due to the formation of lithium dendrites. The elastic modulus of the solid electrolyte SEP may be, for example, in a range of about 15 GPa to about 35 GPa.

The solid electrolyte SEP in the positive electrode active material layer CML may have a smaller average particle diameter than the solid electrolyte in the solid electrolyte layer to be described later. For example, the average particle diameter of the solid electrolyte SEP of the positive electrode active material layer CML may be about 90% or less, about 80% or less, about 70% or less, about 60% or less, about 50% or less, about 40% or less, about 30% or less, or about 20% or less of an average particle diameter of a solid electrolyte of the solid electrolyte layer. The average particle diameter may be a median diameter measured using a laser particle size distribution analyzer.

The positive electrode active material layer CML may include a conductive material. The conductive material may have conductivity without causing an undesirable chemical change in the unit cell, thereby increasing the conductivity of the positive electrode active material CAC and the solid electrolyte SEP. The conductive material may include a carbon-based material. The conductive material may include, for example, at least one of graphite, carbon black, acetylene black, carbon nanofibers, or carbon nanotubes.

The positive electrode active material layer CML may include a binder. The binder may combine the positive electrode active material CAC, the solid electrolyte SEP, and the conductive material within the positive electrode active material layer CML together. The binder may include a material that improves adhesion between the positive electrode active material layer CML and the positive electrode current collector COL1. The binder may include, for example, at least one of polyvinylidene fluoride, styrene butadiene rubber (SBR), polytetrafluoroethylene, vinylidene fluoride/hexafluoropropylene copolymer, polyacrylonitrile, or polymethylmethacrylate.

In an example embodiment, the content of the positive electrode active material CAC may be in a range of about 10 wt% to about 99 wt%, about 30 wt% to about 80 wt%, about 40 wt% to about 70 wt%, about 40 wt% to about 50 wt%, about 60 wt% to about 90 wt%, or about 70 wt% to about 90 wt% with respect to the total weight of the negative electrode active material layer CML.

In an example embodiment, the content of the solid electrolyte SEP in the positive electrode active material layer CML may be in a range of about 10 wt% to about 70 wt%, about10 wt% to about 60 wt%, about 5 wt% to about 30 wt%, about 5wt% to about 25 wt%, or about 10 wt% to about 40 wt% with respect to the total weight of the positive electrode active material layer CML.

The positive electrode active material layer CML may further include additives such as one or more of a filler, a coating agent, a dispersant, and an ion conductive auxiliary agent in addition to the positive electrode active material CAC, the solid electrolyte SEP, the conductive material, and the binder described above.

Referring back to FIGS. 1 to 3, a positive electrode according to example embodiments of the present disclosure is described in more detail. Referring to FIG. 1, the positive electrode current collector COL1 may include a main body section MBD and a positive electrode tab CTB. The main body section MBD may provide a region where the positive electrode active material layer CML is disposed. The positive electrode tab CTB may refer to an uncoated portion region protruding in one direction from the main body section MBD. That is, the positive electrode active material layer CML may be provided on the main body section MBD but not on the positive electrode tab CTB.

Referring to the example embodiment in which the positive electrode tab CTB protrudes in the second direction D2 as shown in FIG. 1, the main body section MBD may include a first end ED1 and a second end ED2 that are opposite to each other in the second direction D2. Each of the first end ED1 and the second end ED2 may refer to one end of the main body section MBD. The first end ED1 may cross a boundary between the positive electrode tab CTB and the main body section MBD. That is, based on the first end ED1, the positive electrode current collector COL1 may be divided into the main body section MBD and the positive electrode tab CTB.

As shown in FIG. 2, even when the specific position of the positive electrode tab CTB differs, the main body section MBD and the positive electrode tab CTB may be still distinguished based on the first end ED1. Regardless of the position thereof, the positive electrode tab CTB may protrude in the second direction D2 in the same manner.

The positive electrode tab CTB may be electrically connected to a lead tab, allowing the positive electrode tab CTB to be connected to the outside of the unit cell. The positive electrode tab CTB may transmit a current generated in the positive electrode to an external circuit. The positive electrode tab CTB may stably provide current flow between the inside and the outside of the unit cell. However, the region of the positive electrode active material layer CML adjacent to the positive electrode tab CTB may experience a decrease in the local current density.

Due to the biased use of the positive electrode active material CAC in certain regions of the positive electrode active material layer CML, irreversible lithium deposition may occur. The irreversible lithium deposition may degrade the structural stability of the positive electrode CSH, and potentially cause a short circuit. Moreover, when increasing the loading amount or thickness of the electrode to enhance the capacity of the all-solid-state battery, these issues may become more severe.

To address these issues, example embodiments of the present disclosure aim to maintain the overall electrochemical stability of the electrode uniformly by introducing an electrode structure that includes multiple regions with different compositions. Hereinafter, the structural characteristics of the positive electrode according to example embodiments of the present disclosure are described in detail.

The main body section MBD may include a tab adjacent section ADJ adjacent to the positive electrode tab CTB. For example, the body section MBD may include a tab adjacent section ADJ extending from the first end ED1 toward the second end ED2. The tab adjacent section ADJ may be a region adjacent the first end ED1.

In an example embodiment, the tab adjacent section ADJ may be defined as a region having an area of about 20% of the total area of the main body section MBD. That is, the tab adjacent section ADJ is a region extending from the first end ED1 toward the second end ED2, and may have an area of about 20% of the area of the main body section MBD.

In an example embodiment, the tab adjacent section ADJ may be a region having a substantially constant width based on the second direction D2. For example, the tab adjacent section ADJ may refer to a region extending from the first end ED1 toward the second end ED2 by a distance of the second length L2. That is, the width of the tab adjacent section ADJ relative to the second direction D2 may be the second length L2.

The area of the tab adjacent section ADJ may be a value obtained by multiplying the width of the first end ED1 in the first direction D1 by the second length L2. The width of the main body section MBD with respect to the second direction D2 may be the first length L1. When the width of the main body section MBD in the first direction D1 is substantially constant, the value L2/L1 of the second length with respect to the first length may be about 0.2.

Referring back to FIG. 3, the positive electrode active material layer CML may include the first region AR1 on the tab adjacent section ADJ. A region of the positive electrode active material layer CML excluding the first region AR1 may be defined as the second region AR2. The area of the first region AR1 may correspond to the area of the tab adjacent section ADJ, but may also be different than the area of the tab adjacent section ADJ.

In an example embodiment, the solid electrolyte content of the first region AR1 may be less than the solid electrolyte content in the second region AR2. The solid electrolyte content may refer to a weight ratio of the solid electrolyte to the total weight of the first region AR1. The solid electrolyte content of the first region AR1 may be about 10 wt % or less. The solid electrolyte content of the second region AR2 may be about 10 wt% or more. The first region AR1 and the second region AR2 may be distinguished based on the solid electrolyte content.

For example, the solid electrolyte content of the first region AR1 may be in a range of about 5 wt% to about 10 wt%. The solid electrolyte content of the second region AR2 may be in a range of about 10 wt% to about 25 wt%.

In an example embodiment, the positive electrode active material content of the first region AR1 may be greater than the positive electrode active material content of the second region AR2. For example, the positive electrode active material content of the first region AR1 may be in a range of about 85 wt% to about 95 wt%, or about 90 wt% to about 95 wt%. The positive electrode active material content of the second region AR2 may be in a range of about 70 wt% to about 85wt%.

As described above, by containing a smaller amount of solid electrolyte, the first region AR1 located on the tab adjacent section ADJ may include a relatively larger amount of the positive electrode active material CAC. By including a higher amount of the positive electrode active material CAC, the first region AR1 may reduce or prevent excessive consumption of the positive electrode active material CAC in the region adjacent to the positive electrode tab CTB. That is, the positive electrode active material layer CML may reduce or prevent the biased use of the positive electrode active material CAC on the tab adjacent section ADJ.

In an example embodiment, the area of the first region AR1 may be in a range of about 10% to about 40% of a total area of the positive electrode active material layer CML. The area may be calculated based on a cross-sectional area of a two-dimensional plane parallel to the positive electrode current collector COL1. For example, the area of the first region AR1 may refer to the area of a plane (see FIGS. 1 and 2) formed by the first direction D1 and the second direction D2.

When the area of the first region AR1 is less than about 10% of a total area of the positive electrode active material layer CML, the effect becomes insignificant, making it practically unable to perform the aforementioned role. When the area of the first region AR1 is greater than about 40% of a total area of the positive electrode active material layer CML, the solid electrolyte content in the positive electrode active material layer CML decreases, leading to a reduction in the ion conductivity of the positive electrode, and consequently deteriorating the overall performance of the positive electrode. By having an area within the above range, the first region AR1 may address the aforementioned issues while possessing appropriate physical properties as a positive electrode active material layer.

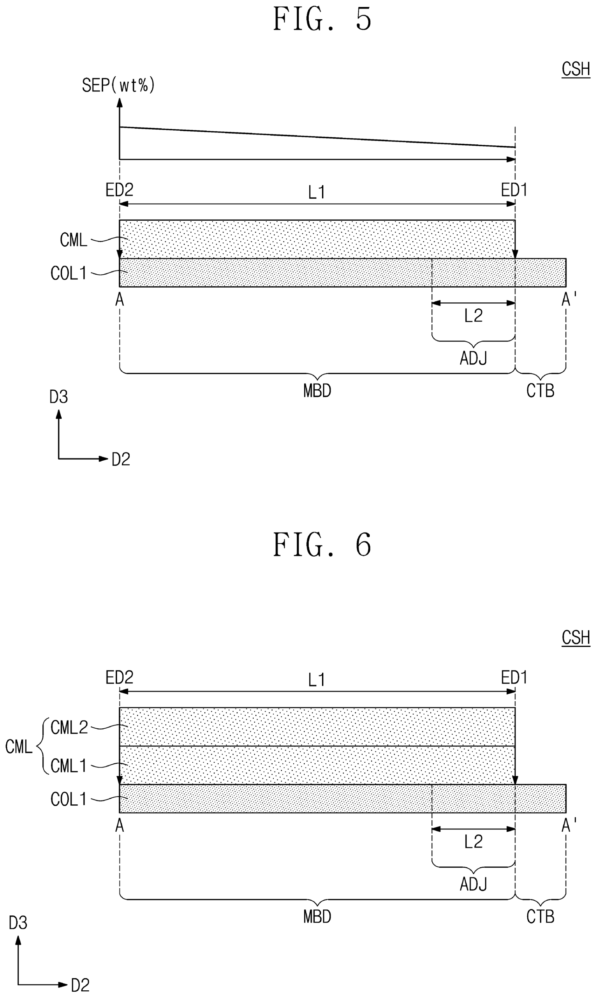

In an example embodiment, referring to FIG. 5, the content of the solid electrolyte SEP in the positive electrode active material layer CML may gradually increase from the first end ED1 to the second end ED2. Also, the content of the positive active material CAC in the positive active material layer CML may gradually increase from the second end ED2 to the first end ED1. That is, the higher the current density in a given region based on the positive electrode tab CTB, the lower the solid electrolyte SEP content and the higher the positive electrode active material CAC content may be. As a result, irreversible changes that primarily occur in regions with significant consumption of the positive electrode active material CAC may be reduced or suppressed.

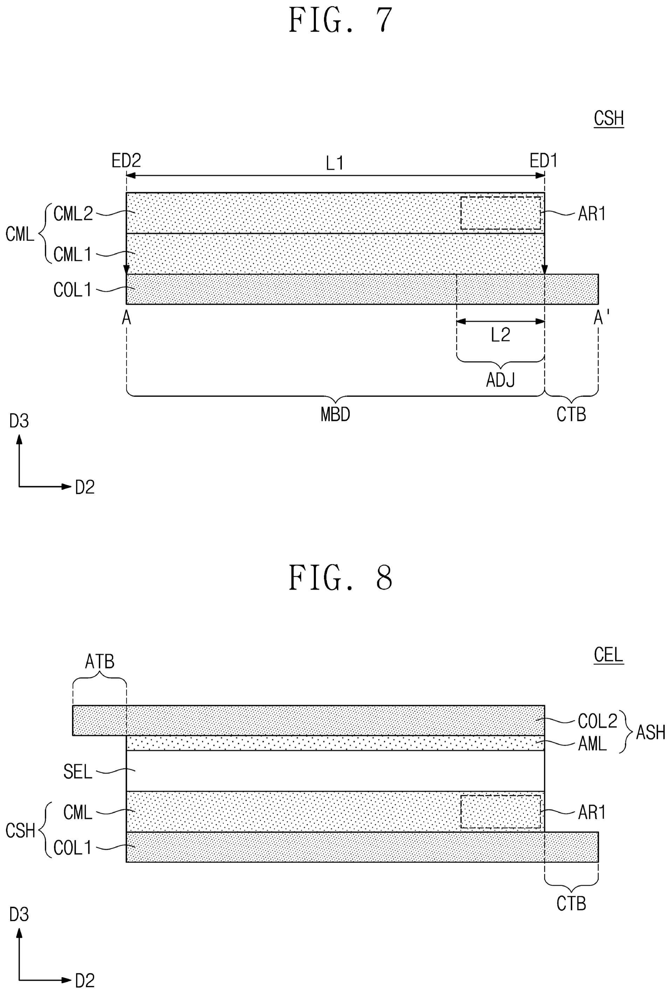

Referring to FIG. 6 and FIG. 7, a positive electrode according to an example embodiment of the present disclosure may include a multi-layer structured positive electrode active material layer CML. For example, the positive electrode active material layer CML may include a first positive electrode active material layer CML1 on the positive electrode current collector COL1, and a second positive electrode active material layer CML2 on the first positive electrode active material layer CML1. Thicknesses of the first positive electrode active material layer and the second positive electrode active material layer may be different from each other. For example, the thickness of the first positive electrode active material layer CML1 may be smaller than the thickness of the second positive electrode active material layer CML2.

In an example embodiment, the solid electrolyte content of the first positive electrode active material layer CML1 may be less than the solid electrolyte content of the second positive electrode active material layers CML2. In addition, the positive electrode active material content of the first positive electrode active material layer CML1 may be greater than the positive electrode active material content of the second positive electrode active material layers CML2. For example, the solid electrolyte content of the first positive electrode active material layer CML1 may be about 10 wt% or less.

Referring to FIG. 7, the second positive electrode active material layer CML2 may include the above-described first region AR1. The first region AR1 may be vertically overlapped with the tab adjacent section ADJ. By setting the solid electrolyte content on the tab adjacent section ADJ of the second positive electrode active material layer CML2 to a lower level, excessive consumption of the positive electrode active material in the region adjacent to the positive electrode tab CTB may be reduced or prevented. For example, the second positive electrode active material layer CML2 may include a first region AR1 and a second region, where the solid electrolyte content of the first region AR1 is about 10 wt% or less, and the solid electrolyte content of the second region AR2 is about 10 wt% or more.

By including a relatively larger amount of the positive electrode active material, the first positive electrode active material layer CML1 may enhance electronic conductivity and facilitate electron exchange with the positive electrode current collector COL1. Furthermore, by reducing the solid electrolyte content in the first region AR1 of the second positive electrode active material layer CML2 on the tab adjacent section ADJ, the content of the positive electrode active material CAC in the region adjacent to the positive electrode tab CTB may be increased. Consequently, the structural arrangement of the positive electrode active material layer CML may provide overall electrochemical stability to the positive electrode.

As described above, the positive electrode CSH according to example embodiments of the present disclosure may improve or optimize the performance of the positive electrode by adjusting the area and composition within the positive electrode active material layer CML. For example, by controlling the solid electrolyte content of the first region AR1 and the second region AR2, the positive electrode active material content of the first region AR1 and the second region AR2, and the area ratio of the first region AR1 and the second region AR2, it may be possible to achieve overall balance in the electrode and enhance the performance thereof. Moreover, the multi-layered structure of the positive electrode active material layer allows for an electrode design that meets various requirements of all-solid-state batteries. Consequently, by improving the stability and cycle life performance of the positive electrode, a high-performance all-solid-state battery may be provided.

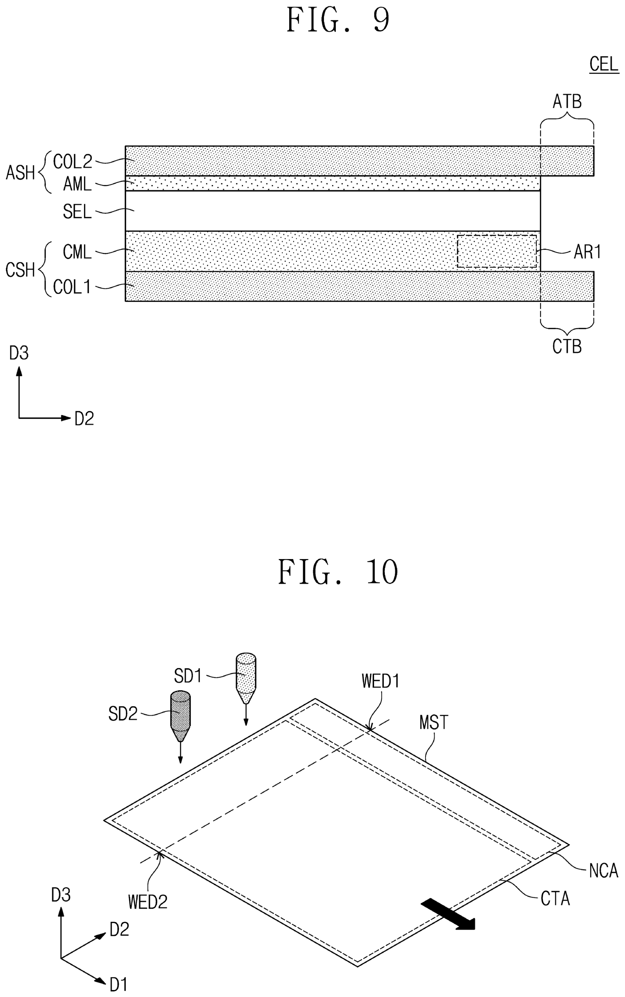

Hereinafter, with reference to FIG. 8 and FIG. 9, other components of an all-solid-state battery according to example embodiments of the present disclosure are described. FIGS. 8 and 9 are cross-sectional views of a unit cell CEL according to example embodiments of the disclosure.

The unit cell CEL may include a positive electrode CSH, a negative electrode ASH, and a solid electrolyte layer SEL between the positive electrode CSH and the negative electrode ASH. The positive electrode CSH may include a positive electrode current collector COL1, and a positive electrode active material layer CML on the positive electrode current collector COL1. The negative electrode ASH may include a negative electrode current collector COL2, and a negative electrode coating layer AML on the negative electrode current collector COL2. The negative electrode current collector COL2 may include a negative electrode tab ATB protruding in one direction. The negative electrode tab ATB may be oriented in the same direction as the positive electrode tab CTB, or may be disposed in an opposite direction.

The negative electrode ASH may include a negative electrode current collector COL2, and a negative electrode coating layer AML on the negative electrode current collector COL2. The negative electrode current collector COL2 may provide a reference surface on which the negative electrode coating layer AML is disposed. The negative electrode current collector COL2 may include, for example, a material that does not react with lithium, that is, does not form either an alloy or a compound with lithium. For example, the negative electrode current collector COL2 may include at least one metal such as or including at least one of copper (Cu), stainless steel, titanium (Ti), iron (Fe), cobalt (Co), and nickel (Ni). The thickness of the negative electrode current collector COL2 may be in a range of about 1 $\mu$m to about 20 $\mu$m, for example, 5 about $\mu$m to about 15 $\mu$m, and for example, about 7 $\mu$m to about 10 $\mu$m.

The negative electrode current collector COL2 may be composed of or include a single metal such as or including at least one of the above-described metals, or may include an alloy or a coated material including two or more metals. The negative electrode current collector COL2 may be in the form of, for example, a plate or a foil. In some example embodiments, the negative electrode current collector COL2 may be omitted.

Although not shown, the negative electrode current collector COL2 according to example embodiments of the present disclosure may include a base film and a metal layer disposed on one surface, or on both surfaces, of the base film.

The base film may include, for example, a polymer. The polymer may be or include, for example, a thermoplastic polymer. The polymer may include, for example, at least one of polyethylene terephthalate (PET), polyethylene (PE), polypropylene (PP), polybutylene terephthalate (PBT), polyimide (PI), or a combination thereof. The polymer may be or include an insulating polymer. By including an insulating thermoplastic polymer, the base film may soften or liquefy in the event of a short circuit, thereby interrupting battery operation and reducing or suppressing a rapid increase in current. The metal layer may include, for example, at least one of copper (Cu), stainless steel, titanium (Ti), iron (Fe), cobalt (Co), nickel (Ni), or an alloy thereof. The negative electrode current collector COL2 may additionally include a metal chip and/or a lead tab. For more details of the base film, the metal layer, the metal chip, and the lead tab of the negative electrode current collector COL2, may refer to the positive electrode current collector COL1 described above. By having such a structure, the negative electrode current collector COL2 may reduce the weight of the negative electrode ASH and, as a result, enhance the energy density of the unit cell CEL.

The negative electrode coating layer AML may be configured such that lithium metal is grown between the unit cell CEL and the negative electrode current collector COL2 during charging of the unit cell CEL. The negative electrode coating layer AML may constitute a protective layer of lithium metal and reduce or suppress deposition and growth of lithium dendrites.

The negative electrode coating layer AML may include a metal and carbon. For example, the negative electrode coating layer AML may include at least one metal such as or including at least one of gold (Au), platinum (Pt), palladium (Pd), silicon (Si), silver (Ag), aluminum (Al), bismuth (Bi), tin (Sn), and zinc (Zn). The metal of the negative electrode coating layer AML may help lithium ions move toward the negative electrode current collector COL2 during charging and discharging of the all-solid-state battery.

The negative electrode coating layer AML may include at least one of amorphous carbon, crystalline carbon, or porous carbon. The negative electrode coating layer AML may include at least one carbon such as or including at least one of carbon black, acetylene black, furnace black, ketjen black, and graphene. The carbon in the negative electrode coating layer AML may reduce or minimize the volume change of the all-solid-state battery during charging and discharging, and may provide structural stability of the negative electrode coating layer AML.

In an example embodiment, the negative electrode coating layer AML may include a mixture (or composite) of carbon black and silver (Ag).

The negative electrode coating layer AML may have a thickness that is less than the thickness of the positive electrode active material layer CML. For example, the negative electrode coating layer AML may have a thickness that is equal to or less than about 50%, 40%, 30%, 20%, 10%, or 5% of the thickness of the positive electrode active material layer CML. The thickness of the negative electrode coating layer AML may be, for example, in a range of about 1 μm to about 20 μm, about 2 μm to about 10 μm, or about 3 μm to about 7 μm. When the thickness of the negative electrode coating layer AML is excessively thin, e.g., less than about 1 μm, lithium dendrites formed between the negative electrode coating layer AML and the negative electrode current collector COL2 may penetrate and collapse the negative electrode coating layer AML, thereby deteriorating the cycle characteristics of the unit cell CEL. On the other hand, when the thickness of the negative electrode coating layer AML is excessively increased, e.g., more than about 20 μm, the energy density of the unit cell CEL may decrease, and the internal resistance of the unit cell CEL may increase due to the negative electrode coating layer AML, thereby deteriorating the cycle characteristics of the unit cell CEL.

The negative electrode coating layer AML may further include other additives in addition to the metal and carbon. The negative electrode coating layer AML may further include, for example, at least one additive such as or including at least one a binder, a filler, a coating agent, a dispersant, and an ion conductive auxiliary.

Although not shown, a carbon layer may further be included between the negative electrode coating layer AML and the solid electrolyte layer SEL to improve adhesion.

In another example embodiment, the negative electrode ASH of the unit cell CEL may further include a lithium metal layer (not shown) between the negative electrode current collector COL2 and the negative electrode coating layer AML. The lithium metal layer may have an increased thickness when the unit cell CEL is charged. The negative electrode coating layer AML may constitute a protective layer for the lithium metal layer, and may simultaneously or contemporaneously reduce or suppress growth of lithium dendrites from the lithium metal layer.

The lithium metal layer may be or include a metal thin film including lithium or a lithium alloy. Lithium alloy may include, but are not limited to, at least one of Li-Al alloy, Li-Sn alloy, Li-In alloy, Li-Ag alloy, Li-Au alloy, Li-Zn alloy, Li-Ge alloy, and Li-Si alloy, and any suitable lithium alloys may be applicable. The lithium metal layer may include at least one of these alloys or lithium. The lithium metal layer may include various kinds of alloys.

The lithium metal layer may constitute a negative electrode active material layer. For example, in the negative electrode according to example embodiments of the present disclosure, lithium or a lithium alloy may be used as the negative electrode active material. The negative electrode active material may form a lithium metal layer, or may be dispersed within the negative electrode coating layer AML. The negative electrode active material may be present between the negative electrode current collector COL2 and the negative electrode coating layer AML.

The solid electrolyte layer SEL may be provided between the positive electrode CSH and the negative electrode

ASH. The solid electrolyte layer SEL may include a sulfide-based solid electrolyte with desired or improved lithium ionic conductivity. The solid electrolyte in the solid electrolyte layer SEL may be the same as, or different from, any one of the materials included in the solid electrolyte SEP in the positive electrode active material layer CML described above.

The solid electrolyte may have a particle shape, such as a sphere or an ellipsoid. For example, the average particle diameter of the solid electrolyte may be in a range of about 1 μm to about 20 μm, about 1 μm to about 15 μm, or about 3 μm to about 10 μm.

The solid electrolyte may include a sulfide-based solid electrolyte. The solid electrolyte may be amorphous, crystalline, or a mixture thereof. Additionally, the solid electrolyte may include, for example, sulfur (S), phosphorus (P), and lithium (Li) as at least constituent elements among the above-described sulfide-based solid electrolyte material. For example, the solid electrolyte may be or include a material including $Li_2S-P_2S_5$. When a sulfide-based solid electrolyte material forming the solid electrolyte includes $Li_2S-P_2S_5$, the molar mixing ratio of $Li_2S$ to $P_2S_5$ may range from about 50:50 to about 90:10.

In an example embodiment, the solid electrolyte may include an argyrodite-type compound including at least one of $Li_{7-x}PS_{6-x}Cl_x$ ($0 \leq x \leq 2$), $Li_{7-x}PS_{6-x}Br_x$ ($0 \leq x \leq 2$), or $Li_{7-x}PS_{6-x}I_x$ ($0 \leq x \leq 2$). The solid electrolyte may include an argyrodite-type compound including at least one of $Li_6PS_5Cl$, $Li_6PS_5Br$ or $Li_6PS_5I$.

In another example embodiment, the solid electrolyte may include an argyrodite-type compound including $Li_{7-a-c}M_aPS_{6-c}X_c$. X may be or include Cl, Br, or a combination thereof. M may be or include at least one of Na, K, Fe, Mg, Ca, Ag, Cu, Zr, Zn, or a combination thereof. Each of a and c may be a real number ranging from 0 to 2.

The density of argyrodite-type solid electrolyte may be in a range of about 1.5 g/cc to about 2.0 g/cc. Since the argyrodite-type solid electrolyte has a density of about 1.5 g/cc or more, the internal resistance of the all-solid-state battery may be reduced, and it may be possible to hinder or prevent the solid electrolyte membrane from penetrating and short-circuiting due to the formation of lithium dendrites. The elastic modulus of the solid electrolyte SEP may be, for example, in a range of about 15 GPa to about 35 GPa.

The solid electrolyte layer SEL may further include a binder. The binder included in the solid electrolyte layer SEL may be or include, for example, at least one of styrene-butadiene rubber (SBR), polytetrafluoroethylene, polyvinylidene fluoride, polyethylene or the like, but is not limited thereto. For example, the binder included in the solid electrolyte layer SEL may include at least one of styrene-butadiene rubber (SBR), polytetrafluoroethylene, polyvinylidene fluoride, polyethylene, and polyacrylate. The binder of the solid electrolyte layer SEL may be the same as, or different from, the binder included in the positive electrode active material layer CML or the binder included the negative electrode coating layer AML.

## Method for manufacturing an All-Solid-State Battery

Hereinafter, a method for manufacturing an all-solid-state battery according to example embodiments of the present disclosure is described. The manufacturing of the all-solid-state battery may include fabricating a positive electrode, a negative electrode, and a solid electrolyte layer, respectively. However, in this description, the method for manufacturing the positive electrode is described.

For example, except for the method for manufacturing the positive electrode for an all-solid-state battery according to example embodiments of the present disclosure, conventional manufacturing processes commonly used in the industry may be applied to the other manufacturing steps of the all-solid-state battery.

A method for manufacturing a positive electrode according to example embodiments of the present disclosure may include forming an active material region on a metal substrate, forming a positive electrode sheet by drying the active material region, and forming a positive electrode composite layer by cutting the positive electrode sheet.

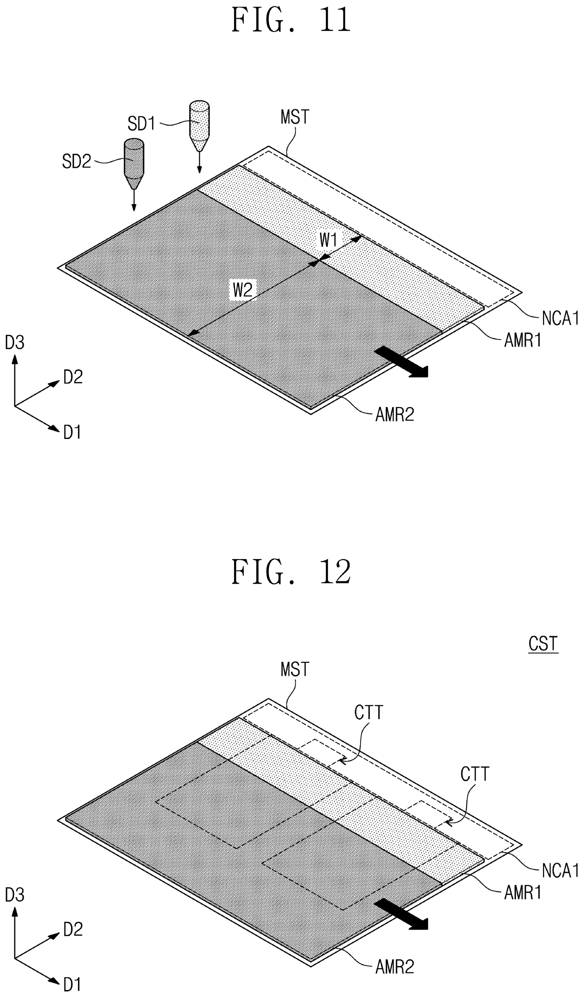

Referring to FIGS. 10 and 11, the metal substrate MST may be conveyed in the first direction D1, and the active material composition may be coated on the conveyed metal substrate MST. A partial region of the metal substrate MST may be defined as a coated region CTA, while the remaining region may be defined as a non-coated region NCA. The non-coated region NCA may be formed at one end of the metal substrate MST in the width direction D2. For example, as shown in FIG. 10, the metal substrate MST may include a non-coated region NCA defined at a first side edge WED1 with respect to the second direction D2. In another example, the metal substrate MST may include a non-coated region NCA defined at a second side edge WED2, which is opposite to the first side edge WED1.

The active material region may be formed only in the coated region CTA. That is, the non-coated region NCA may be defined as a region in which the active material region is omitted. By leaving a portion of the metal substrate MST as the non-coated region NCA, the convenience of manufacturing the electrode may be improved. For example, the non-coated region NCA may be cut to form an electrode tab of the positive electrode according to example embodiments of the present disclosure. The coated region CTA may be cut to form a main body section of the positive electrode according to example embodiments of the present disclosure.

By continuously coating the active material composition on the metal substrate MST conveyed in the first direction D1, the efficiency of electrode production may be improved. In addition, by coating active material compositions

with different compositions, the composition of the positive electrode active material layer may be readily designed during manufacturing. In an example embodiment, a first active material composition SD1 and a second active material composition SD2 may be coated together on the metal substrate. In this case, the active material regions may be formed considering the composition and structure of the positive electrode to be manufactured. Additionally, by adjusting the coating area of the positive electrode active material regions with different compositions, electrode design may be further facilitated. By considering the structure and composition of the electrode from the stage of coating the active material regions on the metal substrate MST, the productivity and yield of electrode manufacturing may be improved.

Referring to FIG. 11, the active material region may include a first active material region AMR1 and a second active material region AMR2. Each of the first active material region AMR1 and the second active material region AMR2 may include a positive electrode active material and a solid electrolyte. For example, the first active material region AMR1 and the second active material region AMR2 may be formed side by side in the width direction D2 on the metal substrate MST. The compositions of the first active material region AMR1 and the second active material region AMR2 may be different from each other.

Each of the first active material region AMR1 and the second active material region AMR1 may be formed with a constant width, or a substantially constant width, on the metal substrate MST. For example, the metal substrate MST may be conveyed in the first direction D1, and as the metal substrate MST is being conveyed, the first active material composition SD1 may be coated with a constant width, or a substantially constant width, thereby forming the first active material region AMR1. The second active material region AMR2 may be coated side by side with the first active material region AMR1 in the width direction D2 of the metal substrate MST. Through such a continuous process, it may become easier to mass-produce a positive electrode active material layer having the structure according to example embodiments of the present disclosure.

Accordingly, the first active material region AMR1 may have a first width W1. The second active material region AMR2 may have a second width W2. The first width W1 and the second width W2 may be adjusted to be suitable for the structure of the electrode to be manufactured. For example, the first width W1 may be smaller than the second width W2.

In an example embodiment, the solid electrolyte content of the first active material region AMR1 may be less than the solid electrolyte content of the second active material region AMR2. The solid electrolyte content of the first active material region AMR1 may be less than about 10 wt%, and the solid electrolyte content of second active material region AMR2 may be greater than about 10 wt%. For example, the solid electrolyte content of the first active material region AMR1 may be in a range of about 5 wt% to about 10wt%. The solid electrolyte content of the second active material region AMR2 may be in a range of about 10 wt% to about 25wt%.

As described above, the metal substrate MST may include the non-coated region in which the active material region is omitted. The non-coated region may be formed on one side, or on both sides, of the metal substrate MST. In an example embodiment, referring to FIG. 11, the metal substrate MST may include a first non-coated region NCA1 formed on one side thereof. Accordingly, the first active material region AMR1 may be adjacent to the first non-coated region NCA1 in the width direction D2. That is, the first non-coated region NCA1, the first active material region AMR1, and the second active material region AMR2 may be arranged side by side in the width direction D2 of the metal substrate MST. In some cases, the metal substrate MST may further include a second non-coated region formed on a side opposite to the first non-coated region NCA1. For example, the second active material region AMR2 may be adjacent to the second non-coated region in the width direction D2.

By drying the active material region on the metal substrate MST, a positive electrode sheet CST may be formed. By drying the active material region, the active material region can be used as a positive electrode active material layer having a suitable thickness and physical properties.

The formed positive electrode sheet CST may be cut to form the positive electrode composite layer CCL. The positive electrode composite layer CCL formed by cutting the positive electrode sheet CST may be used as a positive electrode of an all-solid-state battery. By cutting the positive electrode sheet CST into an appropriate or desired size and shape, a positive electrode for an all-solid-state battery may be provided.

For example, referring to FIG. 12, a cutting line CTT may be provided to match the shape of the positive electrode to be manufactured, and the positive electrode sheet CST may be cut along the cutting line CTT. At this time, the size and shape of the cutting line CTT may be adjusted in accordance with the required capacity, size, or shape of the positive electrode.

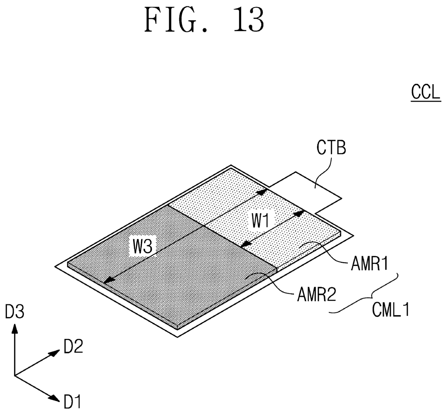

FIG. 13 illustrates a positive electrode composite layer CCL of an example embodiment formed by cutting the positive electrode sheet CST. A part of the first non-coated region NCA1 may be cut by cutting the positive electrode sheet CST. Part of the first non-coated region NCA1 is cut, whereby the positive electrode composite layer CCL may form the positive electrode tab CTB. That is, the positive electrode tab CTB of the positive electrode composite layer CCL may be formed by cutting the first non-coated region NCA1. By cutting the positive electrode sheet CST, only a part of the active material region may be separated. That is, the positive electrode composite layer CCL may include the positive electrode active material layer CML1 formed by cutting part of the active material region.

In an example embodiment, the positive electrode composite layer CCL may include a first active material region

AMR1 and a second active material region AMR2. For example, the positive electrode composite layer CCL may include the positive electrode active material layer CML1 formed by cutting the first active material region AMR1 and the second active material region AMR2. At this time, the area of the first active material region AMR1 and the area of the second active material region AMR2 may be different from each other. The appropriate composition and structure of the positive electrode active material layer CML1 may be designed by adjusting the area of the first active material region AMR1 and the area of the second active material region AMR2.

Referring again to FIG. 12, the area of the active material regions may be adjusted through the size and shape of the cutting line CTT. Although the final area ratio of the positive electrode composite layer CCL can be adjusted by adjusting the area of each of the first active material region AMR1 and the second active material region AMR2 at the coating step, the final area ratio thereof may be adjusted by cutting the positive electrode sheet CST. For example, the cutting line CTT in the form as shown in FIG. 12 may keep the width in the second direction D2 of the first active material region AMR1 constant before and after cutting, but reduce the width in the second direction D2 of the second active material region AMR2.

In an example embodiment, the area of the first active material region AMR1 may be adjusted in the step of forming the first active material region on the metal substrate, and the area of the second active material region AMR2 may be adjusted by cutting the positive electrode sheet CST. In the positive electrode sheet CST, the width W1 of the first active material region may be relatively small compared to the width W2 of the second active material region.

That is, the area ratio of the active material regions may be calculated based on the width of the active material region. For example, referring to FIG. 13, the area ratio of the active material regions may be calculated as the width W1 of the first active material region AMR1 relative to the width W3 of the positive electrode active material layer CML1 in the second direction D2.

In an example embodiment, the area of the first active material region AMR1 may be in a range of about 10% to about 40% of the total area of the positive electrode active material layer. In particular, by adjusting the area of the first active material region AMR1 in which the content of the solid electrolyte is low to the above range, the performance of the positive electrode to be manufactured can be improved. The solid electrolyte content in the region adjacent to the positive electrode tab CTB in the positive electrode active material layer CML1 is set low, whereby the content of the positive electrode active material may be relatively high. This makes it possible to supplement the lithium source in the region where the current density is increased through the positive electrode tab CTB.

Although the foregoing mainly describes forming a single positive electrode active material layer on the metal substrate MST, the method for manufacturing the positive electrode according to example embodiments of the present disclosure may further include forming a double-layered positive electrode active material layer.

In an example embodiment, the positive electrode composite layer CCL may include a first positive electrode active material layer on the metal substrate MST, and a second positive electrode active material layer on the first positive electrode active materials layer. The second positive electrode active material layer may include the above-described first active material region and second active material region.

The positive electrode composite layer CCL may include the first positive electrode active material layer, and a second positive electrode active material layer, which includes active material regions of different compositions, on the first positive electrode active material layer. The second positive electrode active material layer on the first positive electrode active material layer may include the first active material region having a relatively low solid electrolyte content, whereby the active material content in the region adjacent to the positive electrode tab CTB can be increased.

As described above, the method for manufacturing the positive electrode method according to the example embodiment of the present disclosure may improve or optimize the design and performance of the positive electrode by adjusting the area and composition of the active material region on the metal substrate and cutting the active material region. For example, it may be possible to adjust the solid electrolyte content, the positive electrode active material content, and the area ratio of the first active material region and the second active material region in consideration of the current density of the positive electrode, and the like, to achieve an overall balance of the electrode and improve performance. Furthermore, according to the method according to the present disclosure, by implementing a positive electrode active material layer having a single-layer or double-layer structure, a positive electrode design that meets various requirements of an all-solid-state battery can be facilitated. As a result, the productivity and yield of the positive electrode may be improved, and a high-performance all-solid-state battery can be provided.

FIG. 16 is a flowchart illustrating a method of manufacturing a positive electrode for an all-solid-state battery, according to an example embodiment. In FIG. 16, the method 1600 includes operation 1610, which includes forming, on a metal substrate, a first active material region and a second active material region side by side in a width direction of the metal substrate. For example, at least one of the first and second active material regions includes a positive electrode active material and a solid electrolyte. In another example, a content of the solid electrolyte in the first active material region is less than about 10 wt%. In yet another example, a content of the solid electrolyte in the second active material region is greater than about 10 wt%. In a further example, a content of the solid electrolyte in the first active material region is in a range of about 5 wt% to about 10 wt% based on a total weight of the first active material region, and a content of the solid electrolyte in the second active material region is in a range of about 10 wt% to about 25 wt% based on a total weight of the

second active material region.

Operation 1620 includes forming a positive electrode sheet by drying the first and second active material regions. For example, the positive electrode sheet includes a first non-coated region formed on one side of the positive electrode sheet. In another example, the first active material region is adjacent to the first non-coated region in the width direction. Operation 1630 includes forming a positive electrode composite layer by cutting the positive electrode sheet. For example, the positive electrode composite layer includes an electrode tab formed by cutting the first non-coated region, and a first positive electrode active material layer including the first and the second active material regions. In another example, the first active material region of the first positive electrode active material layer has an area in a range of about 10% to about 40% of a total area of the first positive electrode active material layer. In other examples, a content of the positive electrode active material in the first active material region is greater than a content of the positive electrode active material in the second active material region. In further examples, the positive electrode composite layer further includes a second positive electrode active material layer interposed between the metal substrate and the first positive electrode active material layer.

In another example, the method further includes forming a carbon coating layer on the metal substrate. For example, the first and second active material regions are formed on the carbon coating layer.

Hereinafter, the present disclosure is described in more detail with reference to Examples. However, these examples are intended to illustrate examples of the present disclosure, and the scope of the present disclosure is not limited to these examples.

**Preparation of Positive electrode:**

Particles of $LiNi_{0.94}Co_{0.04}Mn_{0.02}O_2$ having an average particle diameter of about 15 μm were prepared as a positive electrode active material. Argyrodite-type crystal $Li_6PS_5Cl$ having an average particle diameter of about 2.5 μm was prepared as a solid electrolyte. PVdF-HFP was prepared as a binder. As the positive electrode slurry composition, a mixture of the above-described positive electrode active material, solid electrolyte, conductive material, and binder was used.

Preparation Example 1: First Positive Electrode Composition

A positive electrode composition was prepared by mixing a positive electrode active material, a solid electrolyte, a conductive material, and a binder at a weight ratio of 91.5:7:0.5:1.

Preparation Example 2: Second Positive Electrode Composition

The second positive electrode composition was prepared by mixing the positive electrode active material, the solid electrolyte, the conductive material, and the binder at a weight ratio of 85:13.5:0.5:1.

Hereinafter, the positive electrode is described in detail with reference to Examples and Comparative Examples. The positive electrode is prepared by dry-coating the first positive electrode composition and/or the second positive electrode composition on one surface of a positive electrode current collector made of aluminum foil having one surface coated with carbon, and pressurizing the first positive electrode composition and/or the second positive electrode composition at about 10 MPa and 130° C. for 10 minutes.

**Preparation of Negative electrode:**

Silver (Ag) particles were prepared as a metal particle and Carbon black (CB) was prepared as a carbon-based material. After carbon black and silver particles were mixed at a weight ratio of 3:1, 4 g of the mixed powder was placed in a container, and 4 g of a methylpyrrolidone (NMP) solution containing 7 wt % of a polyvinylidene fluoride (PVDF) binder (#9300 manufactured by KUREHA CORPORATION) was added thereto to prepare a mixed solution.

A slurry was prepared by stirring the mixed solution while adding NMP little by little to the prepared mixed solution. The prepared slurry was applied to a stainless steel (SUS) sheet using a bar coater, dried at 80° C. in air for 10 minutes, and then vacuum dried at 40° C for 10 hours to prepare a laminate. The prepared laminate was cold roll pressed to flatten the surface to prepare a negative electrode having a negative electrode coating layer/negative electrode current collector structure. At this time, the thickness of the negative electrode coating layer was about 15 μm, and the area of the negative electrode current collector was the same as the area of the negative electrode coat layer.

**Preparation of Solid Electrolyte Layer:**

A mixture was prepared by mixing 98.5 parts by weight of $Li_6PS_5Cl$ solid electrolyte, which is an Argyrodite-type

crystal, and 1.5 parts by weight of an acrylic binder. Octyl acetate was added to the prepared mixture while stirring to produce a slurry. The prepared slurry was applied onto a nonwoven fabric having a thickness of 15 μm placed on a PET substrate having a thickness of 75 μm using a bar coater, and dried in air at a temperature of 80°C for 10 minutes to prepare a laminate. The prepared laminate was vacuum dried at 80°C for 2 hours to prepare a solid electrolyte layer.

**Assembly of All-Solid-State Battery:**

A solid electrolyte layer was disposed on the negative electrode, and a positive electrode was disposed on the solid electrolyte layer. The prepared laminate was subjected to a plate press at about 85°C and a pressure of 500 MPa for 30 min. By such a pressure treatment, the solid electrolyte layer is sintered, and the battery characteristics are improved. The thickness of the sintered solid electrolyte layer was about 45 μm.

The pressurized laminate was placed in a pouch and vacuum sealed to produce an all-solid-state battery. A portion of the positive electrode current collector and a portion of the negative electrode current collector each was extended out of the sealed battery and used as a positive electrode terminal and a negative electrode terminal.

## Embodiments

### Example 1

The first positive electrode composition of the Preparation Example 1 and the second positive electrode composition of the Preparation Example 2 were coated side by side on the carbon-coated positive electrode current collector to form a positive electrode active material layer.

Specifically, the first positive electrode composition was coated on the tab adjacent section of the main body section, and the second positive electrode composition was coated side by side in the width direction. In this case, the width direction is based on the direction in which the positive electrode tab protrudes. That is, the first positive electrode composition and the second positive electrode composition are sequentially coated, in the order of being adjacent to the positive electrode tab.

The positive electrode was prepared such that, with respect to the total area of the positive electrode active material layer, the area of the first region coated with the first positive electrode composition was about 15%, while the remaining second region coated with the second positive electrode composition had an area of about 85%.

### Example 2

A positive electrode was prepared with the same composition as in Example 1, except that, with respect to the total area of the positive electrode active material layer, the area of the first region was about 35%, while the area of the second region was about 65%.

### Example 3

A first positive electrode active material layer was formed on the carbon-coated positive electrode current collector, and a second positive electrode active material layer was further formed on the first positive electrode active material layer.

Specifically, the first positive electrode active material layer was formed by coating the first positive electrode composition of Preparation Example 1. A second positive electrode active material layer was formed on the first positive electrode active material layer, and the second positive electrode active material layer includes a first region on the tab adjacent section and other second region. At this time, the first region was formed by coating the first positive electrode composition of Preparation Example 1, and the second region was formed by applying the second positive electrode composition of Preparation Example 2.

The positive electrode was prepared such that, with respect to the total area of the second positive electrode active material layer, the area of the first region was about 15% and, while the second region had an area of about 85%.

### Comparative Example 1

The first positive electrode composition of Preparation Example 1 was coated on a carbon-coated positive electrode current collector to form a positive electrode active material layer.

## Comparative Example 2

The second positive electrode composition of Preparation Example 2 was coated on a carbon-coated positive electrode current collector to form a positive electrode active material layer.

## Comparative Example 3

A positive electrode was prepared with the same composition as in Example 1, with a difference that, with respect to the total area of the positive electrode active material layer, the area of the first region was about 5%, while the area of the second region was about 95%.

## Comparative Example 4

A positive electrode was prepared with the same composition as in Example 1, with a difference that, with respect to the total area of the positive electrode active material layer, the area of the first region was about 50%, while the area of the second region was about 50%.

As described above, an all-solid-state battery was produced in the same manner with a difference that the positive electrode was changed. The all-solid-state batteries according to Examples and Comparative Examples are summarized in Table 1 below.

In the case of Examples 1 and 2, the positive electrode active material layer includes a single layer, and has a structure in which the first region on the tab adjacent section and the other second region are separated to have different composition. In the case of Example 3, a double-layered positive electrode active material layer is included, and the second positive electrode active material layers are divided into a first region on the tab adjacent section and other second region.

In Comparative Example 1 and Comparative Example 2, a single layer was formed, and regions were not separated. In Comparative Example 3 and Comparative Example 4, the positive electrode active material layer is a single layer, but is divided into two regions and has different compositions.

Table 1:

| | Positive electrode | | | Structure |
|---|---|---|---|---|
| | | Area of first region | Area of second region | |
| Example 1 | First Layer | 15% | 85% | Single Layer/Region Division |
| Example 2 | First Layer | 35% | 65% | Single Layer/Region Division |
| Example 3 | First Layer | 100% | | Double layer/Region Division |
| | Second Layer | 15% | 85% | |
| Comparative Example 1 | First Layer | 100% | | Single layer |
| Comparative Example 2 | First Layer | | 100% | Single layer |
| Comparative Example 3 | First Layer | 5% | 95% | Single Layer/Region Division |
| Comparative Example 4 | First Layer | 50% | 50% | Single Layer/Region Division |

## Evaluation Example 1: Battery Performance Evaluation

The performance of the all-solid-state batteries according to the above-described Examples and Comparative Examples was evaluated. For example, the first cycle was charging at a constant current of 0.05 C for 20 hours until the cell voltage became 4.2 V. Then, discharging was performed at a current of 0.05 C for 20 hours until the battery voltage became 3.0 V.

The second cycle was charging at a constant current of 0.1 C for 10 hours until the cell voltage was 4.2 V. Then, the battery was discharged at a constant current of 0.1 C for 10 hours until the battery voltage reached 3.0 V.

After the second cycle, charge and discharge were performed up to 100 cycles under the same conditions as in

the second cycle. The capacity retention rate was evaluated as shown in the following Formula 1.

Capacity retention rate (%) = [$n^{th}$ cycle discharge capacity/$1^{st}$ cycle discharge capacity] $\times$ 100. Formula 1:

The capacity retention rate after 100 cycles is shown in Table 2 below. However, when the capacity retention rate was less than 80%, the evaluation was terminated at an early stage.

Table 2:

| | Capacity Retention rate (%, 100 cycles) | Remark |
|---|---|---|
| Example 1 | 90% | |
| Example 2 | 87% | |
| Example 3 | 92% | |
| Comparative Example 1 | (70%, 1 cycle) | Early Termination due to unachieved capacity |
| Comparative Example 2 | (88%, 40 cycles) | Early Termination due to a short circuit |
| Comparative Example 3 | (80% 50 cycles) | Early Termination due to a short circuit |
| Comparative Example 4 | 80% | |

Referring to the above evaluation results, it can be seen that the capacity retention rate of the all-solid-state battery according to Examples is relatively high. This indicates that the positive electrode according to an example embodiment of the present disclosure has a region containing less solid electrolyte on the tab adjacent section, so that the electrical/chemical balance of the positive electrode is improved or optimized, and as a result, the life characteristics are improved.

In the case of Comparative Example 1, the overall reduction in the solid electrolyte content in the positive electrode active material layer led to a decrease in performance. This is presumed to be because, in all-solid-state battery, a low content of solid electrolyte hinders the smooth movement of lithium ions, reducing or preventing the electrode from exhibiting a desired performance.

In the case of Comparative Example 3, the first region was formed too small, indicating that the effect thereof was substantially insignificant.

On the contrary, in Comparative Example 4, where the first region was excessively large, the overall solid electrolyte content in the positive electrode decreased, leading to a reduction in performance.

## Evaluation Example 2: All-Solid-State Battery Interface Analysis

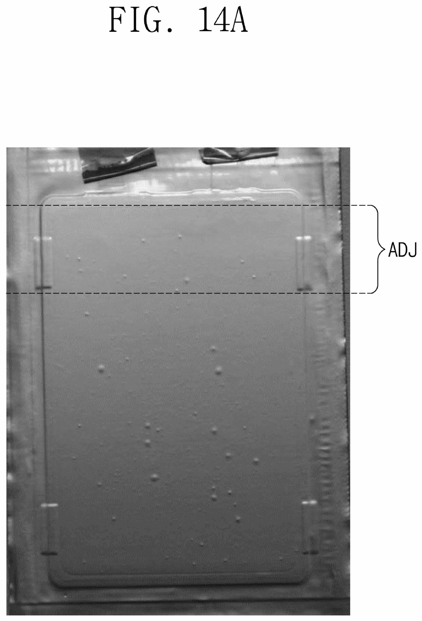

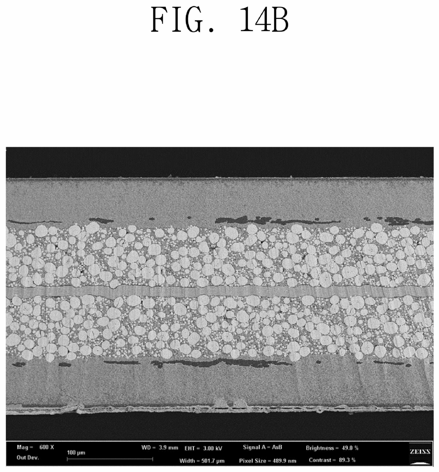

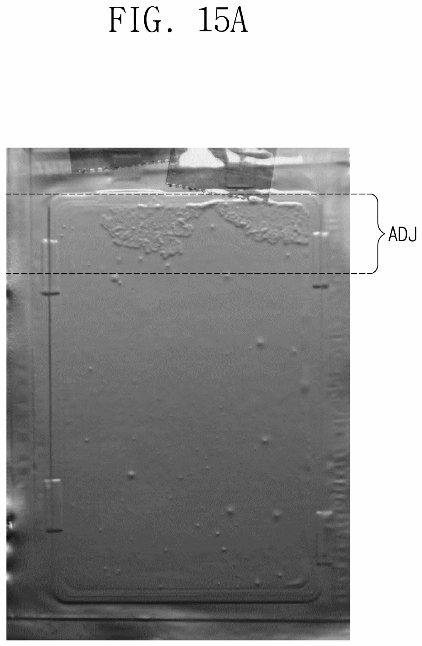

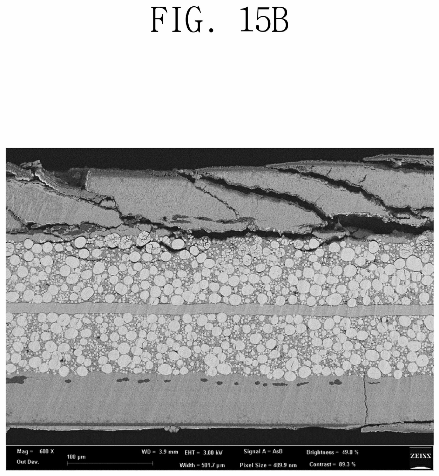

In the all-solid-state batteries according to the above Examples and Comparative Examples, the cross section of the positive electrode active material layer after the charge/discharge process was analyzed. FIG. 14A is an image of the external appearance of Example 1, and FIG. 14B is an SEM image obtained by analyzing a cross section of Example 1. FIG. 15A is an image of the external appearance of Comparative Example 3, and FIG. 15B is an SEM image obtained by analyzing cross section at an abnormal deposition position of Comparative Example 3.

The superiority of the examples of the present disclosure was confirmed by comparative analysis of the appearance at the initial stage and the appearance after 100 cycles. Unlike the comparative examples, it is found that the positive electrode active material layer is stably maintained even after a large number of charging/discharging processes are performed.

For example, referring to the appearance of the all-solid-state battery in FIG. 15A, it can be confirmed that abnormal precipitation occurs in the upper end portion. This indicates that precipitation occurred mainly in the region adjacent to the tab. FIG. 15B is an SEM image of the precipitation region cross section of FIG. 15A. Referring to FIG. 15B, it can be seen that the positive electrode according to the comparative example does not maintain the structure, unlike the example.

According to example embodiments of the present disclosure, by improving the uniformity of the electrode, local irreversible precipitation and short circuit may be reduced or prevented. As a result, the stability and lifespan of the battery can be improved.

While the present disclosure has been described with reference to example embodiments, it should be understood that these example embodiments are provided for illustrative purposes only and do not limit the scope of the present disclosure. Various modifications and equivalent arrangements may be made without departing from the spirit and scope of the appended claims. Accordingly, the described embodiments should be regarded as examples rather than limitations

of the present disclosure.

## Claims

1. A positive electrode (CSH) for an all-solid-state battery, the positive electrode comprising:

   a positive electrode current collector (COL1); and
   a positive electrode active material layer (CML) on the positive electrode current collector (COL1),
   wherein the positive electrode current collector (COL1) comprises a main body section (MBD), and a positive electrode tab (CTB) protruding in one direction (D2) from the main body section (MBD),
   wherein the positive electrode active material layer (CML) is provided on the main body section (MBD), and comprises a positive electrode active material (CAC) and a solid electrolyte (SEP),
   wherein the main body section (MBD) comprises a first end (ED1) and a second end (ED2) that are opposite to each other in the one direction (D2),
   wherein the first end (ED1) represents a boundary between the positive electrode tab (CTB) and the main body section (MBD) of the positive electrode current collector (COL1),
   wherein the main body section (MBD) comprises a tab adjacent section (ADJ) extending from the first (ED1) end toward the second end (ED2),
   wherein the positive electrode active material layer (CML) comprises a first region (AR1) on the tab adjacent section (ADJ), and a second region (AR2) which is a remainder of the positive electrode active material layer (CML) excluding the first region (AR1),
   wherein a content of the solid electrolyte (SEP) in the first region (AR1) is less than 10 wt%, based on a total weight of the first region (AR1) of the positive electrode active material layer (CML), and
   wherein a content of the solid electrolyte (SEP) in the second region (AR2) is greater than 10 wt%, based on a total weight of the second region (AR2) of the positive electrode active material layer (CML).

2. The positive electrode (CSH) as claimed in claim 1, wherein the tab adjacent section (ADJ) is defined as a region having an area of 20% of the total area of the main body section (MBD), the area being defined in a cross-sectional area of a two-dimensional plane parallel to the positive electrode current collector (COL1), wherein the two-dimensional plane is formed by the first direction (D1) and a second direction (D2) being perpendicular to the first direction (D1).

3. The positive electrode (CSH) as claimed in any of the previous claims, wherein the first region (AR1) has an area in a range of 10% to 40% of the total area of the positive electrode active material layer (CML), the area being defined in a cross-sectional area of a two-dimensional plane parallel to the positive electrode current collector (COL1), wherein the two-dimensional plane is formed by the first direction (D1) and a second direction (D2) being perpendicular to the first direction (D1).

4. The positive electrode (CSH) as claimed in any of the previous claims, wherein a content of the solid electrolyte (SEP) in the first region (AR1) is in a range of 5 wt% to 10 wt% based on a total weight of the first region (AR1) of the positive electrode active material layer (CML), and
   wherein a content of the solid electrolyte (SEP) in the second region (AR2) is in a range of 10 wt% to 25 wt% based on a total weight of the second region (AR2) of the positive electrode active material layer (CML).

5. The positive electrode (CSH) as claimed in any of the previous claims, wherein the positive electrode active material layer (CML) comprises a first positive electrode active material layer (CML1) on the positive electrode current collector (COL1), and a second positive electrode active material layer (CML2) on the first positive electrode active material layer (CML1), and
   wherein the second positive electrode active material layer (CML2) comprises the first region (AR1) and the second region (AR2).

6. The positive electrode (CSH) as claimed in claim 5, wherein a thickness of the first positive electrode active material layer (CML1) is smaller than a thickness of the second positive electrode active material layer (CML2), and wherein a content of the solid electrolyte (SEP) in the first positive electrode active material layer (CML1) is greater than 10 wt% based on a total weight of the first positive electrode active material layer (CML1).

7. The positive electrode (CSH) as claimed in any of the previous claims, wherein a content of the positive electrode

active material (CAC) in the first region (AR1) is greater than a content of the positive electrode active material (CAC) in the second region (AR2).

**8.** The positive electrode (CSH) as claimed in any of the previous claims, wherein a content of the solid electrolyte (SEP) in the positive electrode active material layer (CML) gradually increases from the first end (ED1) to the second end (ED2).

**9.** The positive electrode (CSH) as claimed in any of the previous claims,

wherein the solid electrolyte (SEP) comprises an argyrodite-type sulfide-based solid electrolyte represented by $Li_{7-a-c}M_aPS_{6-c}X_c$ ($0 \leq a \leq 2$, $0 \leq c \leq 2$),
wherein X comprises at least one of F, Br, Cl, and a combination thereof, and
wherein M comprises at least one of scandium (Sc), yttrium (Y), titanium (Ti), zirconium (Zr), hafnium (Hf), vanadium (V), niobium (Nb), tantalum (Ta), chromium (Cr), molybdenum (Mo), tungsten (W), manganese (Mn), technetium (Tc), rhenium (Re), iron (Fe), ruthenium (Ru), osmium (Os), cobalt (Co), rhodium (Rh), iridium (Ir), nickel (Ni), palladium (Pd), platinum (Pt), copper (Cu), silver (Ag), gold (Au), zinc (Zn), cadmium (Cd), mercury (Hg), aluminum (Al), gallium (Ga), indium (In), thallium (Tl), silicon (Si), germanium (Ge), tin (Sn), lead (Pb), arsenic (As), antimony (Sb), bismuth (Bi), and a combination thereof.

**10.** A method for manufacturing a positive electrode (CSH) for an all-solid-state battery, preferably for manufacturing a positive electrode (CSH) configured according to any of the previous claims, the method comprising:

forming, on a metal substrate (MST), a first active material region (AMR1) and a second active material region (AMR2) side by side in a width direction (D2) of the metal substrate (MST), wherein at least one of the first active material region (AMR1) and second active material region (AMR2) comprises a positive electrode active material (CAC) and a solid electrolyte (SEP);
forming a positive electrode sheet (CST) by drying the first active material region (AMR1) and second active material region (AMR2); and
forming a positive electrode composite layer (CCL) by cutting the positive electrode sheet (CST),
wherein the positive electrode sheet (CST) comprises a first non-coated region (NCA1) formed on one side of the positive electrode sheet (CST),
wherein the first active material region (AMR1) is adjacent to the first non-coated region (NCA1) in the width direction (D2),
wherein the positive electrode composite layer (CCL) comprises an electrode tab (CTB) formed by cutting the first non-coated region (NCA1), and a first positive electrode active material layer (CML1) comprising the first active material region (AMR1) and the second active material region (AMR2),
wherein a content of the solid electrolyte (SEP) in the first active material region (AMR1) is less than 10 wt%, based on a total weight of the first active material region (ARM1) and
wherein a content of the solid electrolyte (SEP) in the second active material region (ARM2) is greater than 10 wt%, based on a total weight of the second active material region (AMR2).

**11.** The method as claimed in claim 10, wherein the first active material region (AMR1) of the first positive electrode active material layer (CML1) has an area in a range of 10% to 40% of a total area of the first positive electrode active material layer (CML1), the area being defined in a cross-sectional area of a two-dimensional plane parallel to the positive electrode sheet (CST), wherein the two-dimensional plane is formed by the width direction (D2) and a first direction (D1) being perpendicular to the width direction (D2).

**12.** The method as claimed in any of claims 10 or 11, wherein a content of the solid electrolyte (SEP) in the first active material region (AMR1) is in a range of 5 wt% to 10 wt% based on a total weight of the first active material region (AMR1), and
wherein a content of the solid electrolyte (SEP) in the second active material region (AMR2) is in a range of 10 wt% to 25 wt% based on a total weight of the second active material region (AMR2).

**13.** The method as claimed in any of claims 10 to 12, wherein a content of the positive electrode active material (CAC) in the first active material region (AMR1) is greater than a content of the positive electrode active material (CAC) in the second active material region (AMR2).

**14.** The method as claimed in any of claims 10 to 13, further comprising forming a carbon coating layer on the metal

substrate (MST),
wherein the first active material region (AMR1) and the second active material region (AMR2) are formed on the carbon coating layer.

**15.** The method as claimed in any of claims 10 to 14, wherein the positive electrode composite layer (CCL) further comprises a second positive electrode active material layer (CML2) interposed between the metal substrate (MST) and the first positive electrode active material layer (CML1).

FIG. 1

CSH
CTB
ED1
A'
COL1
L2
ADJ
L1
MBD
ED2
A
D2
D1
D3

# FIG. 2

CSH
CTB ED1
A'
COL1
L2
ADJ
L1
MBD
A
ED2
D2
D1
D3

FIG. 3

CSH
ED2
L1
ED1
M
AR2
AR1
CML
COL1
A
A'
L2
ADJ
MBD
CTB
D3
D2

FIG. 4

M
CAC
SEP

FIG. 5

CSH
SEP(wt%)
ED2
L1
ED1
CML
COL1
A
A'
L2
ADJ
MBD
CTB
D3
D2

FIG. 6

CSH
ED2
L1
ED1
CML
CML2
CML1
COL1
A
A'
L2
ADJ
MBD
CTB
D3
D2

FIG. 7

CSH
ED2
L1
ED1
CML
CML2
CML1
AR1
COL1
A
A'
L2
ADJ
MBD
CTB
D3
D2

FIG. 8

CEL
ATB
COL2
AML
ASH
SEL
CSH
CML
COL1
AR1
CTB
D3
D2

FIG. 9

CEL
ATB
ASH
COL2
AML
SEL
CML
AR1
CSH
COL1
CTB
D3
D2

FIG. 10

SD1
SD2
WED1
MST
NCA
CTA
WED2
D3
D2
D1

FIG. 11

SD1
SD2
MST
W1
W2
NCA1
AMR1
AMR2
D3
D2
D1

FIG. 12

CST
MST
CTT
CTT
NCA1
AMR1
AMR2
D3
D2
D1

FIG. 13

CCL
CTB
W1
W3
AMR1
AMR2
CML1
D3
D2
D1

FIG. 14A

ADJ

FIG. 14B

Mag = 600 X
Out Dev.
100 µm
WD = 3.9 mm
EHT = 3.00 kV
Width = 501.7 µm
Signal A = AsB
Pixel Size = 489.9 nm
Brightness = 49.0 %
Contrast = 89.3 %
ZEISS

FIG. 15A

ADJ

FIG. 15B

Mag = 600 X
Out Dev.
100 µm
WD = 3.9 mm
EHT = 3.00 kV
Width = 501.7 µm
Signal A = AsB
Pixel Size = 489.9 nm
Brightness = 49.0 %
Contrast = 89.3 %
ZEISS

Europäisches Patentamt
European Patent Office
Office européen des brevets

# EUROPEAN SEARCH REPORT

Application Number
EP 26 15 0024

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | KR 2023 0150058 A (SAMSUNG SDI CO LTD [KR]) 30 October 2023 (2023-10-30) * paragraphs [0053], [0134] - [0149], [0036]; figures 4,5 * ----- | 1-15 | INV. H01M4/04 H01M4/13 H01M10/0525 H01M10/0562 H01M10/0585 H01M4/131 |
| A | US 2024/313351 A1 (HWANG YOUNGJIN [KR] ET AL) 19 September 2024 (2024-09-19) * paragraph [0062]; figure 5 * ----- | 1-15 | |
| A | US 2021/305630 A1 (OHTA MASAHIRO [JP] ET AL) 30 September 2021 (2021-09-30) * paragraphs [0035], [0036]; figures 1A,1B * ----- | 1-15 | |

TECHNICAL FIELDS SEARCHED (IPC)

H01M

The present search report has been drawn up for all claims

| Place of search | Date of completion of the search | Examiner |
|---|---|---|
| The Hague | 8 May 2026 | Mohsin, Ijaz |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

2
EPO FORM 1503 03.82 (P04C01)

## ANNEX TO THE EUROPEAN SEARCH REPORT ON EUROPEAN PATENT APPLICATION NO.

EP 26 15 0024

This annex lists the patent family members relating to the patent documents cited in the above-mentioned European search report. The members are as contained in the European Patent Office EDP file on
The European Patent Office is in no way liable for these particulars which are merely given for the purpose of information.

08-05-2026

| Patent document cited in search report | Publication date | Patent family member(s) | Publication date |
|---|---|---|---|
| KR 20230150058 A | 30-10-2023 | KR 20230150058 A | 30-10-2023 |
| | | US 2025273745 A1 | 28-08-2025 |
| | | WO 2023204682 A1 | 26-10-2023 |
| US 2024313351 A1 | 19-09-2024 | CN 117882230 A | 12-04-2024 |
| | | KR 20230084671 A | 13-06-2023 |
| | | US 2024313351 A1 | 19-09-2024 |
| | | WO 2023106663 A1 | 15-06-2023 |
| US 2021305630 A1 | 30-09-2021 | CN 112424975 A | 26-02-2021 |
| | | JP 7046185 B2 | 01-04-2022 |
| | | JP WO2020017467 A1 | 02-08-2021 |
| | | US 2021305630 A1 | 30-09-2021 |
| | | WO 2020017467 A1 | 23-01-2020 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- KR 1020250005348